# DEMANDE DE BREVET EUROPEEN

(11) **EP 4 624 204 A1**
(43) Date de publication de la demande: **01.10.2025**
(21) Numéro de dépôt: 25166309.2
(22) Date de dépôt: 26.03.2025
(51) Int. Cl.: B60G 7/02

(54) **ENSEMBLE D' ASSEMBLAGE SOUS CONTRAINTE POUR UN VEHICULE AUTOMOBILE**

(30) Priorité: 29.03.2024 FR 2403311
(71) Demandeur: Renault s.a.s, 92100 Boulogne Billancourt (FR)
(72) Inventeur: CLOSCA, Florian, 062203 BUCAREST (RO); ESCANDE, Bruno, 78280 GUYANCOURT (FR); FULAS, Victor, 062203 BUCAREST (RO); STAN, Victor, 062203 BUCAREST (RO)

(57) **Abrégé**

1. Ensemble (10) d'assemblage comprenant :
• un élément (14) de structure de véhicule automobile comportant des surfaces (16, 17) de fixation,
• un organe (28) du véhicule automobile, lié à un palier élastique (20)
• un support coaxial (32) d'axe X traversant le palier élastique et apte à être fixé sous les surfaces (16, 17) de fixation par des vis (38),
• un dispositif (42) de soutien du palier (20) équipé du support (32), apte à recevoir en appui le support (32),
caractérisé en ce qu'il comporte des moyens de blocage en rotation (44) du support (32) autour de l'axe X et de blocage en déplacement (46) du support (32) dans un plan (X, Y) parallèle aux surfaces (16, 17) pour s'opposer au déplacement du support (32) en réponse à une sollicitation exercée par ledit organe (28) sur ledit palier élastique (20).

## Description

### Domaine technique de l'invention

L'invention concerne un ensemble d'assemblage pour un véhicule automobile comprenant un sous-ensemble dudit véhicule à assembler et un dispositif de soutien permettant d'assembler ce sous-ensemble.

### Arrière-plan technique

L'assemblage des différents organes d'un véhicule automobile requiert souvent, sur la chaîne de montage de ce véhicule, l'utilisation de dispositifs de soutien de ces organes.

C'est le cas en particulier pour l'assemblage d'un organe du véhicule, par exemple une biellette de suspension d'un train roulant du véhicule, à un élément de structure du véhicule par l'intermédiaire d'un palier élastique. Le dispositif de soutien fait alors partie d'un support de montage sur lequel repose l'ensemble du train roulant du véhicule, ce support de montage reposant par exemple sur un convoyeur pour être déplacé sous une caisse du véhicule de manière à permettre l'assemblage de l'ensemble du train roulant, et en particulier de la biellette de suspension préalablement équipée du palier élastique, à un élément de structure de la caisse du véhicule.

D'une manière plus générale, de tels dispositifs de soutien sont utilisés pour le montage sur la chaîne d'autres organes, tels que, par exemple, des groupes motopropulseurs ou d'autres organes mécaniques de véhicules automobiles, qui sont destinés à être assemblés à des éléments de structure de ces véhicules par l'intermédiaire de paliers élastiques.

Dans certains cas, tels que notamment le cas d'un organe du véhicule faisant partie d'un ensemble d'organes volumineux, comme c'est le cas pour une biellette de suspension faisant partie d'un train roulant du véhicule, le déplacement de l'ensemble du train roulant, qui est particulièrement volumineux, sous l'élément de structure de la caisse du véhicule peut nécessiter des précautions particulières préalablement à son montage pour éviter que la biellette n'interfère avec l'élément de structure de caisse du véhicule.

Conventionnellement, ce problème est résolu par l'interposition d'une pièce intermédiaire entre le palier et l'élément de structure de caisse du véhicule. Ainsi, selon l'état de la technique, il est connu dans le cadre du montage d'une biellette de suspension liée à une bague extérieure d'un palier élastique, de monter ce palier élastique dans un boîtier intermédiaire qui est lui-même fixé sous l'élément de structure de caisse. Un axe traverse une bague intérieure du palier élastique pour assurer sa fixation au boîtier. L'utilisation de ce boîtier intermédiaire permet d'augmenter le jeu entre la biellette et l'élément de structure de caisse, évitant ainsi l'interférence de la biellette avec cet élément de structure de caisse.

L'inconvénient d'une telle conception est qu'elle nécessite l'utilisation d'éléments physiques de repérage et de mise en position entre l'élément de structure de caisse et le boîtier, pour assurer un positionnement correct de celui-ci par rapport à l'élément de structure de caisse.

En outre, il est nécessaire d'utiliser dans ce cas au moins trois points de fixation, tels que, par exemple, trois vis, pour assurer une fixation isostatique du boîtier par rapport à l'élément de structure de caisse.

Or, pour des raisons de coût, il est souhaitable de minimiser le nombre de pièces mises en jeu, et dans le cadre de l'assemblage d'une biellette sur un élément de structure de caisse, il a été proposé d'utiliser un palier muni d'un support coaxial en forme de barreau plan traversant la bague intérieure de ce palier, ledit support coaxial étant fixé directement à l'élément de structure de caisse, qui est évidé pour permettre le passage du palier.

L'utilisation de ce support coaxial permet un gain appréciable de pièces, puisqu'il permet de se dispenser d'un boîtier intermédiaire et puisqu'il permet aussi de réduire le nombre de vis total de quatre à deux.

Toutefois, il présente l'inconvénient de rapprocher la biellette de l'élément de structure de caisse préalablement au montage. Il est donc nécessaire dans ce cas d'incliner la biellette pour éviter qu'elle n'interfère avec l'élément de structure de caisse. La biellette étant liée à la bague extérieure du palier qui est elle-même liée élastiquement à la bague intérieure du palier et au support coaxial, l'inclinaison de la biellette provoque nécessairement l'inclinaison du support coaxial, rendant ainsi difficile son assemblage sous l'élément de structure de caisse du véhicule.

Il existe donc un réel besoin pour un ensemble d'assemblage permettant d'immobiliser le support dans une position apte à permettre son montage.

### Résumé de l'invention

L'invention satisfait à ce besoin en proposant un ensemble d'assemblage comportant des moyens de bridage du support par rapport à l'élément de structure du véhicule.

Dans ce but, l'invention propose un ensemble d'assemblage, comprenant :
- un sous-ensemble de véhicule automobile, comprenant :
   - un élément de structure dudit véhicule automobile comportant deux surfaces planes de fixation,
   - un palier élastique comportant une bague intérieure d'axe X, et au moins une bague extérieure,
   - un organe du véhicule automobile, liée à ladite bague extérieure,
   - un support coaxial traversant la bague intérieure du palier, comportant des première et seconde plaques s'étendant de part et d'autre du palier, chaque plaque étant apte à être fixée à une des surfaces planes de fixation par une vis qui traverse un premier perçage de ladite plaque et qui est introduite dans l'élément de structure,
- un dispositif de soutien du palier équipé du support, apte à recevoir en appui les première et seconde plaques du support, ledit dispositif de soutien étant mobile verticalement sous ledit élément de structure et parallèlement à ladite surface plane de fixation,
   caractérisé en ce qu'il comporte en outre des moyens de blocage en rotation du support autour de l'axe X et de blocage en déplacement du support dans un plan parallèle auxdites surfaces planes de fixation par rapport au dispositif de soutien pour s'opposer au déplacement dudit support en réponse à une sollicitation exercée par ledit organe sur ledit palier.

Les moyens de blocage en rotation permettent d'assurer l'immobilisation du support coaxial lorsque l'organe du véhicule exerce une contrainte, en l'occurrence ici un couple de torsion, sur le palier élastique, afin de garantir son maintien en positionnement dans une position apte à permettre son montage. Les moyens de blocage en déplacement du support permettent par ailleurs de conforter ce maintien en position dans un plan parallèle à la surface plane de fixation.

Selon différentes caractéristiques supplémentaires de l'invention, qui pourront être prises ensemble ou séparément et qui forment autant de modes de réalisation de l'invention:
- le dispositif de soutien comporte des première et seconde surfaces d'appui recevant en appui des extrémités des première et seconde plaques opposées au palier,
- les moyens de blocage en déplacement du support comportent :
   - un pion, notamment tronconique, qui est porté par le dispositif de soutien et s'étend perpendiculairement à une des surfaces planes de fixation,
   - un deuxième perçage, complémentaire dudit pion et formé dans l'extrémité de la première plaque, apte à être reçu sur ledit pion,
- le pion est monté coulissant par rapport au dispositif de soutien perpendiculairement à la surface plane de fixation associée et il est rappelé élastiquement vers ladite surface plane de fixation associée,
- les moyens de blocage en rotation du support autour de l'axe X comportent un ergot s'étendant axialement à partir de l'extrémité de la seconde plaque, et une fourche, portée par le dispositif de soutien dont des branches sont aptes à coopérer avec des bords opposés par rapport à l'axe X dudit ergot,
- le pion et la fourche s'étendent respectivement à partir des première et deuxième surfaces d'appui, et sont portés par un bâti commun,
- la fourche est portée par une platine qui est guidée par rapport au bâti commun par l'intermédiaire d'une glissière d'axe perpendiculaire à une des surfaces planes de fixation,
- l'ensemble comporte en outre des moyens de positionnement automatique du support par rapport à l'élément de structure, comportant :
   - deux filetages, fixes par rapport à l'élément de structure, coaxiaux à des troisièmes perçages formés dans les surfaces de fixation, et aptes à recevoir des extrémités filetées des vis,
   - les premiers perçages formés dans les plaques, configurés pour être traversés avec jeu par les extrémités filetées desdites vis,
   - des portées de centrage desdites vis, agencées entre des têtes desdites vis et lesdites extrémités filetées, de diamètre correspondant auxdits premiers perçages,
   - une extrémité d'échappement de la glissière, conformée pour permettre un échappement de la platine hors de la glissière en fin de course avec un débattement dans un plan parallèle à la surface plane de fixation,
- la glissière comporte :
   - au moins un alésage formé dans la platine, d'axe perpendiculaire à la surface plane de fixation associée,
   - au moins une colonne, portée par le bâti, reçue dans ledit alésage, ladite colonne comportant un premier tronçon jointif avec le bâti, de même diamètre que l'alésage, et un second tronçon distal, jointif avec le premier tronçon, de diamètre inférieur à celui du premier tronçon, formant l'extrémité d'échappement de la glissière.

L'invention concerne aussi un procédé d'assemblage d'un sous-ensemble de véhicule automobile sous contrainte à l'aide d'un ensemble d'assemblage du type décrit précédemment, caractérisé en ce qu'il comporte les étapes de :
i) disposer l'organe avec le palier équipé du support avec ses plaques reposant sur le dispositif de soutien et coopérant avec les moyens de blocage en rotation et de blocage en déplacement du support,
ii) exercer une contrainte sur ledit organe pour qu'il exerce une sollicitation sur le palier,
iii) déplacer le support reposant sur le dispositif de soutien sous l'élément de structure en agençant chaque plaque en regard d'une surface de fixation,
iv) remonter le dispositif de soutien sous l'élément de structure jusqu'à une première position d'accostage au cours de laquelle les vis sont partiellement introduites dans l'élément de structure,
v) centrer les premiers perçages des plaques sur les vis,
vi) fixer lesdites plaques aux surfaces planes de l'élément de structure jusqu'à une deuxième position de fixation au cours de laquelle lesdites vis, en coopérant avec les plaques et l'élément de structure, sollicitent les plaques et soulèvent au moins une des deux plaques pour que ladite plaque quitte le dispositif de soutien et s'échappe des moyens de blocage en rotation du support,
vii) descendre le dispositif du soutien pour libérer le support du dispositif de soutien et des moyens de blocage en déplacement,
viiii) relâcher la contrainte sur ledit organe.

### Brève description des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés parmi lesquels :
- la figure 1 est une vue de dessous d'un sous-ensemble de véhicule automobile selon l'invention ;
- la figure 2 est une vue de détail en perspective du sous-ensemble de véhicule automobile de la figure 1 ;
- la figure 3 est une vue d'ensemble en perspective d'un support de montage équipé d'un train arrière de véhicule automobile et en particulier d'un ensemble de montage d'un train arrière de véhicule automobile comportant un organe du véhicule, un palier, un support et un dispositif de soutien selon l'invention ;
- la figure 4 est une vue de détail de la figure 3 ;
- la figure 5 est une vue en perspective du dispositif de soutien, des moyens de blocage en rotation, et de l'organe selon l'invention ;
- la figure 6 est une vue de côté d'un train arrière de véhicule automobile ;
- la figure 7 est une vue de côté du train arrière de véhicule automobile reposant sur un dispositif de soutien selon une première position de repos ;
- la figure 8 est une vue de côté du train arrière de véhicule automobile reposant sur le dispositif de soutien selon une deuxième position contrainte ;
- la figure 9 est une vue de côté du train arrière de véhicule automobile reposant sur le dispositif de soutien selon une troisième position d'accostage d'un élément de structure du véhicule ;
- la figure 10 est une vue de côté du train arrière de véhicule automobile quittant le dispositif de soutien selon une quatrième position de vissage sous l'élément de structure du véhicule ;
- la figure 11 est une vue en coupe des positions relatives du support, de l'élément de structure, et d'une vis de fixation associées à la troisième position d'accostage ;
- la figure 12 est une vue en perspective des positions relatives du dispositif de soutien, des moyens de blocage en rotation, et de l'organe selon l'invention associées à la troisième position d'accostage ;
- la figure 13 est une vue en coupe des positions relatives du support, de l'élément de structure, et d'une vis de fixation associées à une première étape de vissage ;
- la figure 14 est une vue en coupe des positions relatives du support, de l'élément de structure, et d'une vis de fixation associées à une deuxième étape de vissage ;
- la figure 15 est une vue en perspective des positions relatives du dispositif de soutien, des moyens de blocage en rotation, et de l'organe selon l'invention associées à la deuxième étape de vissage ;
- la figure 16 est une vue en coupe des positions relatives du support, de l'élément de structure, et d'une vis de fixation associées à une troisième étape de vissage ;
- la figure 17 est une vue en perspective des positions relatives du dispositif de soutien, des moyens de blocage en rotation, et de l'organe selon l'invention associées à la troisième étape de vissage ;
- la figure 18 est une vue en coupe de la figure 4 par le plan X, Z ;
- La figure 19 est un diagramme-bloc illustrant les étapes d'un sous-ensemble de véhicule automobile selon l'invention.

### Description détaillée de l'invention

Dans la description qui va suivre, des chiffres de référence identiques désignent des pièces identiques ou ayant des fonctions similaires.

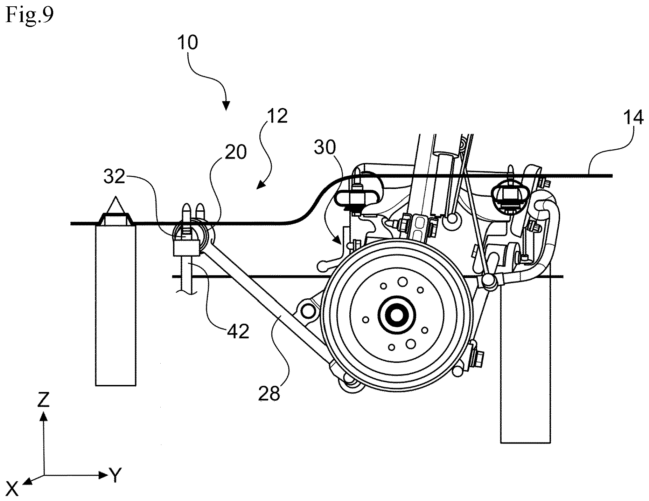

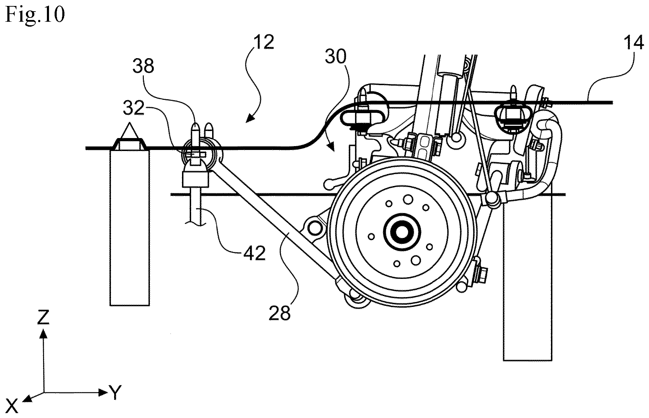

On a représenté aux figures 9 et 10 un ensemble d'assemblage 10 selon l'invention. L'ensemble 10 et ses constituants seront décrits en référence aux directions du trièdre "X, Y, Z" ou "X" désigne une direction longitudinale, "Y" désigne une première direction transversale sensiblement horizontale perpendiculaire à la direction longitudinale "X", et "Z" désigne une deuxième direction transversale sensiblement verticale perpendiculaire à la direction longitudinale "X".

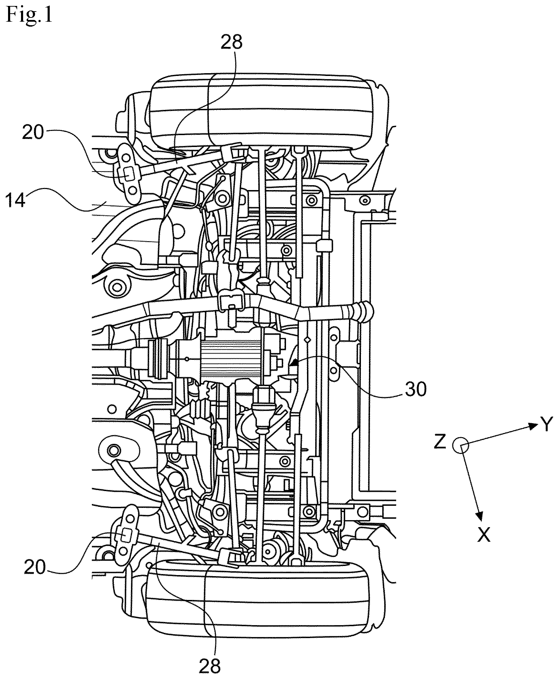

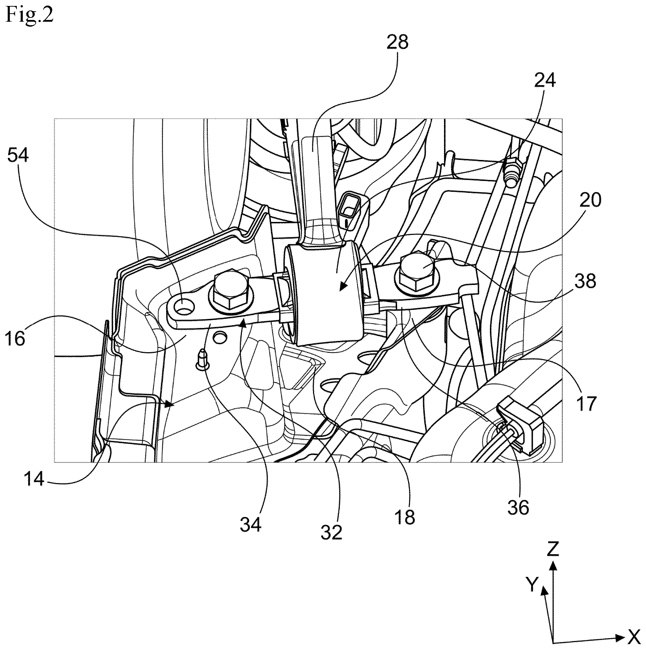

Comme on peut le voir globalement aux figures 9 et 10, l'ensemble d'assemblage 10 comporte en premier lieu un sous-ensemble 12 de véhicule automobile, comprenant pour l'essentiel un élément de structure 14 du véhicule automobile. Tel qu'il a été représenté de manière schématique, cet élément de structure 14 est un élément de structure de caisse du véhicule, notamment un soubassement d'une caisse autoporteuse de ce véhicule. L'élément de structure 14 a également été représenté aux figures 1 et 2. Comment on peut le voir à la figure 2, l'élément de structure 14 de caisse comporte deux surfaces planes 16, 17 de fixation agencées de part et d'autre d'un évidement 18.

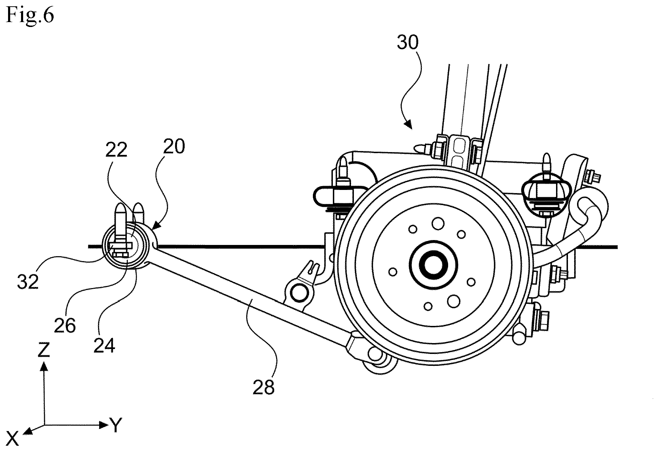

Le sous-ensemble 12 comporte également un palier élastique 20 comportant, comme l'illustre plus particulièrement la figure 6, une bague intérieure 22 d'axe X, et au moins une bague extérieure 24. Les bagues intérieure 22 et extérieure 24 sont liées l'une à l'autre par un élément en matériau élastomère 26 qui assure de manière classique l'élasticité du palier élastique 20. L'évidement 18 de l'élément de structure 14 permet de loger le palier 20.

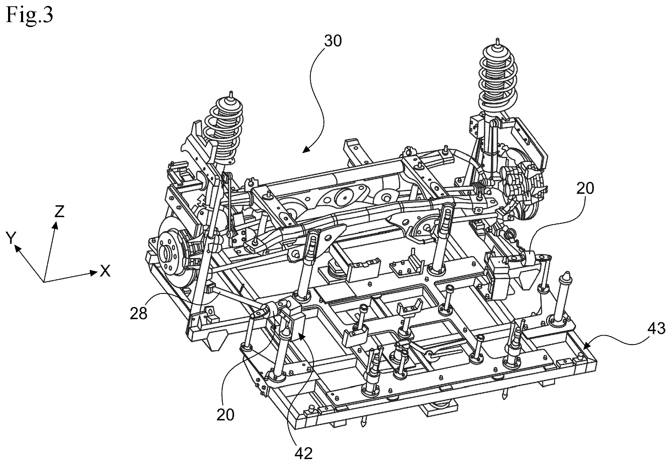

Un organe 28 du véhicule automobile est lié à la bague extérieure 24. Dans le cas présent, l'organe 28 est une biellette de suspension faisant partie d'un train roulant 30 du véhicule automobile qui a été représenté dans son intégralité aux figures 1 et 3, et de profil aux figures 6 à 10.

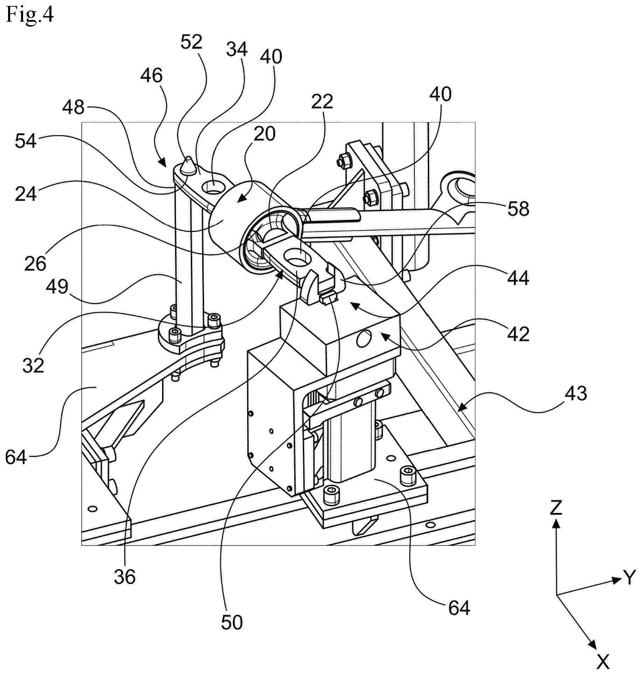

Le sous-ensemble 12 comporte aussi un support coaxial 32 qui traverse la bague intérieure 22 du palier 20. Pour l'essentiel, comme l'illustre la figure 2, ce support 32 est conformé sous la forme d'une barreau plan comportant une première plaque 34 et une seconde plaque 36 s'étendant de part et d'autre du palier 20. Chaque plaque 34, 36 est apte à être fixée à une des surfaces planes de fixation 16, 17 correspondantes de l'élément de structure 14 par une vis 38 qui traverse un premier perçage 40 de ladite plaque et qui est introduite dans l'élément 14 de structure, c'est-à-dire dans le soubassement du véhicule. Les perçages 40 des plaques 34, 36 ont été représentés en particulier aux figures 4, 11, 13, 14, 16 et 18.

Le sous-ensemble 12 comporte enfin un dispositif 42 de soutien du palier 20 équipé du support 32. Ce dispositif 42 de soutien est apte à recevoir en appui les première et seconde plaques 34, 36 du support 32. Ce dispositif de soutien 42 fait partie d'un support de montage 43, qui est par exemple apte à être déplacé par un convoyeur (non représenté) sur une chaîne d'assemblage du véhicule. Le dispositif de soutien 42, qui a été représenté en détail à la figure 4, est, comme le support 43 dont il fait partie, mobile verticalement selon la direction Z sous l'élément de structure 14 et parallèlement aux surfaces planes 16,17 de fixation dans un plan X, Y sous l'élément de structure 14.

Conformément à l'invention, l'ensemble d'assemblage 10 comporte en outre des moyens 44 de blocage en rotation du support 32 autour de l'axe X et des moyens de blocage 46 en déplacement du support 32 dans un plan X, Y parallèle aux surfaces planes 16, 17 de fixation par rapport au dispositif de soutien 42 pour s'opposer au déplacement du support 32 en réponse à une sollicitation exercée par l'organe 28 sur le palier 20.

En effet, dans le cadre du montage du train arrière 30, qui est volumineux, le déplacement du train arrière 30 sous l'élément de structure 14 de la caisse du véhicule nécessite des précautions particulières pour éviter qu'il n'interfère avec l'élément de structure de caisse 14 du véhicule.

Or, l'utilisation du support coaxial 32, qui est fixé directement aux surfaces de fixation 16, 17 de l'élément de structure 14 présente l'inconvénient de rapprocher l'organe ou biellette 28 de l'élément de structure de caisse 14 préalablement au montage. Il est donc nécessaire dans ce cas d'incliner la biellette 28 pour éviter qu'elle n'interfère avec l'élément 14 de structure de caisse.

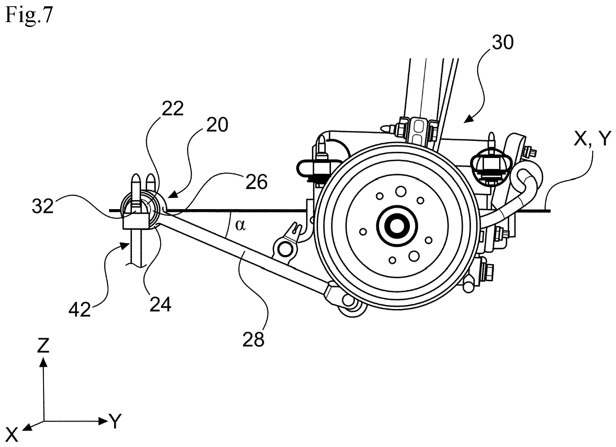

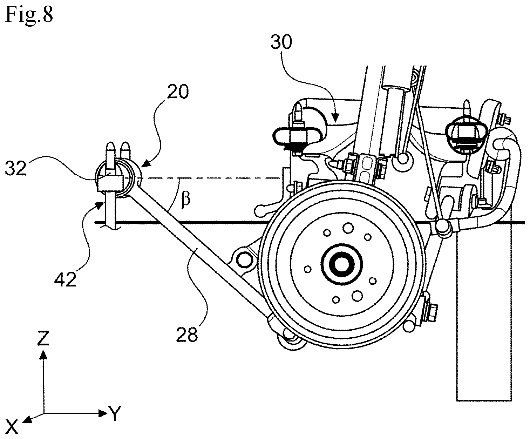

Lors du montage, le train arrière 30, initialement libre comme représenté à la figure 6, est déposé sur le support de montage 43, de manière que le support 32, lié à la biellette 28 par l'intermédiaire du palier 20 repose sur le dispositif de soutien 42, comme représenté à la figure 7. Dans cette configuration, la biellette 28 forme un angle α avec le plan X,Y parallèle aux surfaces de fixation 16,17 sur lesquelles le support 32 doit être fixé. Pour permettre le passage de la biellette 28 sous l'élément de structure de caisse 14, il est nécessaire d'incliner la biellette 28 selon un angle β supérieur à l'angle α, comme représenté à la figure 8. L'inclinaison de la biellette 28 introduit donc une contrainte dans le palier 20 qui tend naturellement à être reportée sur le support coaxial 32, puisque la bague extérieure 24 du palier 20 est liée élastiquement à la bague intérieure 22 du palier 20 par l'intermédiaire du matériau élastomère 26. Les moyens 44 de blocage en rotation du support 32 autour de l'axe X et de blocage 46 en déplacement du support 32 dans le plan X, Y permettent d'éviter le basculement du support coaxial 32 et d'assurer son montage.

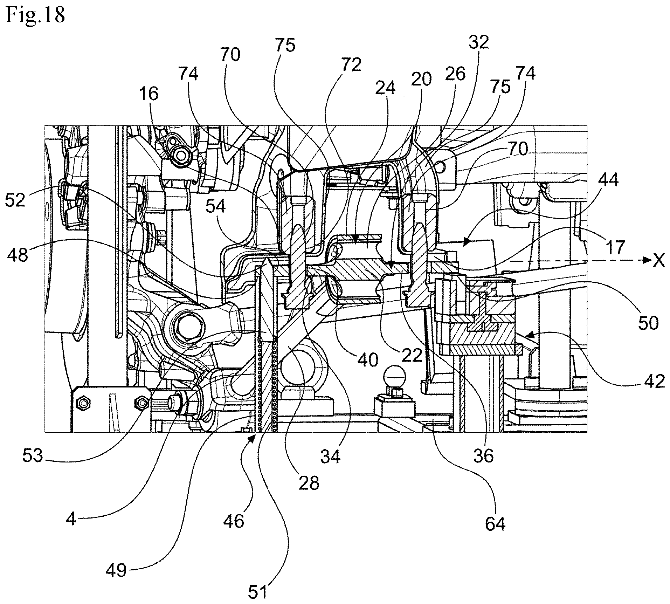

D'une manière générale, comme on peut le voir aux figures 4 et 18, le dispositif de soutien 42 comporte des première et seconde surfaces d'appui 48, 50 recevant en appui des extrémités des première et seconde plaques 34, 36 qui sont opposées au palier 20. Ces première et seconde surface d'appui 48, 50 sont destinées à permettre le soutien des première et seconde plaques 34, 36 selon la direction Z.

Les moyens 46 de blocage en déplacement du support comportent un pion 52, notamment tronconique, qui est porté par le dispositif de soutien 42 et qui s'étend perpendiculairement à une des surfaces planes de fixation 16. Les moyens 46 de blocage en déplacement du support comportent, complémentairement à ce pion 52, un deuxième perçage 54, formé dans l'extrémité de la première plaque 34, apte à être reçu sur ledit pion 52.

Pour garantir que le pion 52 accompagne le support 32 lors de son montage sous les surfaces de fixation 16,17, le pion 52 est monté coulissant par rapport au dispositif de soutien 42 perpendiculairement à la surface plane de fixation associée, ici la première surface plane 16 de fixation, et il est rappelé élastiquement vers cette surface 16. On garantit ainsi le guidage du dispositif de soutien 42 sur le pion 52 au fur et à mesure de sa remontée du support 32 vers les surfaces de fixation 16, 17 et par cette occasion on garantit également le blocage dans les directions X et Y du support 32 par rapport au dispositif de soutien 42.

La surface d'appui 48 qui immobilise le support 32 suivant la direction Z et le pion 52 qui l'immobilise dans le plan X, Y assurent deux fonctions différentes. À ce titre, ils peuvent être dissociés en des endroits différents du dispositif de soutien 42. Toutefois, de préférence par souci de compacité, le pion 52 s'étend à partir de la première surface d'appui 48. À cet effet, le pion 52 est monté à l'extrémité d'une tige 53 qui est montée coulissante dans un fût 49 lui-même porté par le dispositif de soutien 42. La tige 53 est rappelée élastiquement dans ce fût 49 par un ressort 51 qui assure le rappel élastique du pion 52 vers la première surface 16 de fixation. L'extrémité du fût 49, à partir de laquelle le pion 52 fait saillie, comporte la première surface d'appui 48.

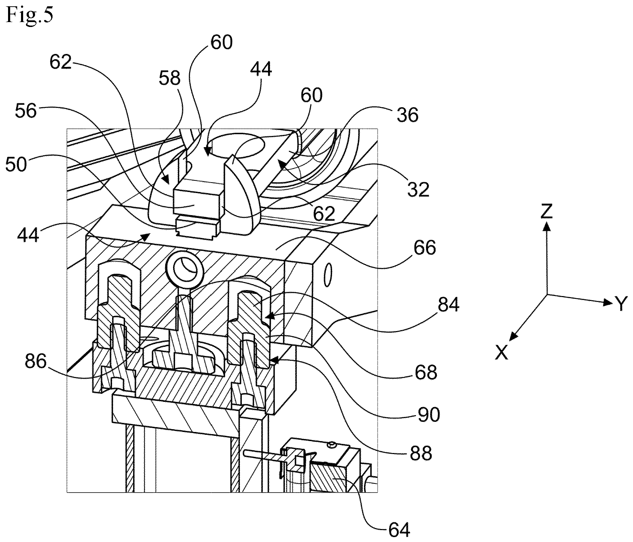

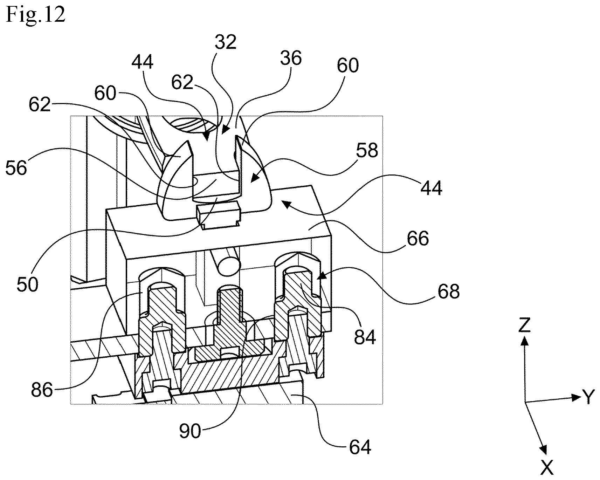

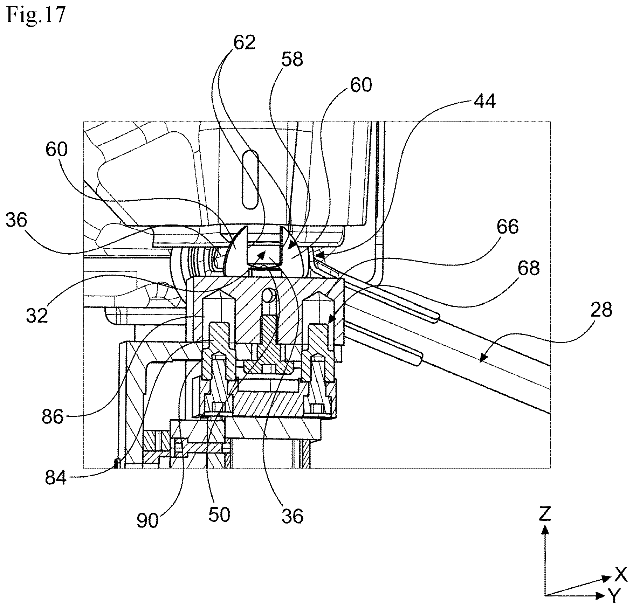

Comme l'illustrent les figures 5, 12, 15, et 17, les moyens 44 de blocage en rotation du support 32 autour de l'axe X, pour leur part, comportent un ergot 56 qui s'étend axialement à partir de l'extrémité de la seconde plaque 36. Les moyens 44 de blocage en rotation comportent également une fourche 58, portée par le dispositif de soutien 42, dont des branches 60 sont aptes à coopérer avec des bords 62 de l'ergot 56, opposés par rapport à l'axe X dudit ergot 56.

La surface d'appui 50 qui immobilise le support 32 suivant la direction Z et la fourche 58 qui immobilise le support en rotation autour de l'axe dans le plan X assurent deux fonctions différentes. À ce titre, ils peuvent être dissociés en des endroits différents du dispositif de soutien 42. Toutefois, de préférence, par souci de compacité, la fourche 58 s'étend à partir de la surface d'appui associé, c'est-à-dire ici à partir de la deuxième surface d'appui 50.

La fourche 58 et le fût 49 sont portés par un même bâti commun 64, qui a été représenté à la figure 4.

La fourche 58 n'est pas portée directement par le bâti commun 64. En effet, comme l'illustre les figures 5,12, 15, 17, la fourche 58 est portée par une platine 66 qui est guidée par rapport au bâti commun par l'intermédiaire d'une glissière 68 d'axe Z perpendiculaire à la surface plane 17 de fixation associée. Cette glissière 68 permet d'accompagner la fourche 58 dans son maintien en anti-rotation du support 32 tout au long de sa remontée vers les surfaces de fixation 16,17 comme on va le voir dans la suite de la présente description.

Enfin, l'ensemble 10 comporte en outre des moyens de positionnement automatique du support 32 par rapport à l'élément de structure 14.

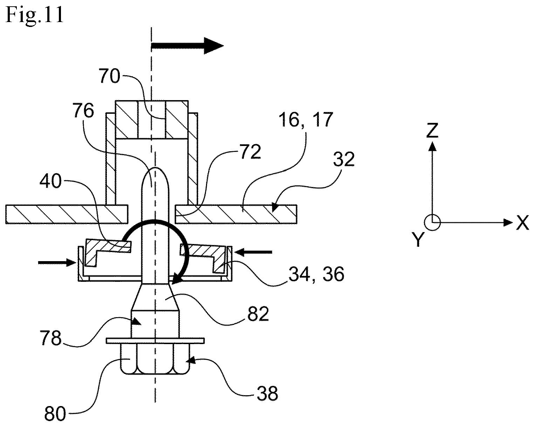

Ces moyens comportent, en premier lieu comme on peut le voir en particulier aux figures 11, 13, 14, 16, 18, deux filetages 70, fixes par rapport à l'élément de structure 14 qui sont coaxiaux à des troisièmes perçages 72 formés dans les surfaces 16,17 de fixation. Comme on le voit à la figure 18, les filetages 70 sont par exemple formés dans des douilles 74 qui sont montées prisonnières dans des parties tubulaires 75 de l'élément 14 de structure de caisse.

Comme l'illustrent les figures 11, 13, 14, 16, les filetages 70 sont aptes à recevoir des extrémités filetées 76 des vis 38.

Les moyens de positionnement automatique comportent en outre les premiers perçages 40 formés dans les plaques 34,36. Les premiers perçages 40 sont configurés pour être traversés avec jeu par les extrémités 76 filetées des vis 38, comme représenté à la figure 11. Les moyens de positionnement automatique comportent également des portées de centrage 78 des vis 38 qui sont destinées à coopérer avec les premiers perçages 40. Chaque portée de centrage 78 est d'un diamètre correspondant aux premiers perçages 40 et est agencée entre une tête 80 de la vis 38 et l'extrémité filetée 76 correspondante. Chaque portée de centrage 78 comporte à sa jonction avec l'extrémité filetée 76 un tronçon de centrage 82 tronconique. Ce tronçon de centrage 82 tronconique permet l'introduction de la portée de centrage 78 dans les premiers perçages 40. L'extrémité filetée 76 la portée de centrage 78 de la vis 38 joue un rôle déterminant dans la mise en position du support 32, comme on va le voir dans la suite de la présente description.

Enfin, les moyens de positionnement automatique comportent une extrémité d'échappement 84 de la glissière 68, qui est conformée pour permettre un échappement de la platine 66 hors de la glissière 68 en fin de course avec un débattement dans le plan X, Y parallèle à la surface plane 17 de fixation.

Comme on peut le voir sur les figures 5, 12, et 17 la glissière 68 comporte au moins un alésage 86 qui est formé dans la platine 66. Cet alésage 86 est perpendiculaire à la surface plane de fixation associée, c'est-à-dire ici la seconde surface plane de fixation 17. La glissière 68 comporte aussi au moins une colonne 88, portée par le bâti 64, qui est reçue dans l'alésage 86. Cette colonne 88 comporte un premier tronçon 90 qui est jointif avec le bâti 64 et de même diamètre que l'alésage 86, et un second tronçon distal 84, jointif avec le premier tronçon 90, de diamètre inférieur à un diamètre du premier tronçon 90, qui forme l'extrémité d'échappement de la glissière 68.

On remarquera que, de préférence, les moyens 44 de blocage en rotation comportent deux glissières 68, afin d'éviter la rotation de la platine 66

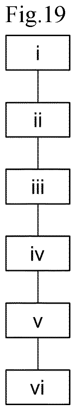

Dans cette configuration, le sous-ensemble 10 peut avantageusement être assemblé à l'aide d'un procédé d'assemblage sous contrainte à l'aide d'un ensemble d'assemblage du type décrit précédemment comme représenté à la figure 19 et aux figures précédemment citées.

Comme on l'a vu, le procédé comporte une première étape i) au cours de laquelle on dépose l'organe formé de la biellette 28 avec le palier 20 équipé du support 32 reposant par l'intermédiaire de ses plaques 34, 36 sur le dispositif de soutien 42 et coopérant avec les moyens de blocage en rotation 44 et les moyens de blocage en déplacement 46 du support 32, comme représenté à la figure 9.

Puis, comme l'illustre la figure 8, au cours d'une étape ii) on exerce une contrainte sur l'organe 28 pour qu'il exerce une sollicitation sur le palier 20. Cette sollicitation consiste à exercer un couple sur biellette 28 pour qu'elle effectue une rotation autour du palier 20 dans le plan Y, Z jusqu'à former ledit angle β.

Puis, au cours d'une étape iii) on déplace le support 32 reposant sur le dispositif 42 de soutien sous l'élément de structure 14 en agençant chaque plaque 34, 36 en regard d'une surface 16,17 de fixation comme représenté à la figure 18.

Puis, au cours d'une étape iv) on remonte le dispositif de soutien 42 sous l'élément de structure 14 jusqu'à une première position d'accostage, représenté à la figure 10, au cours de laquelle les vis 38 sont partiellement introduites dans l'élément de structure. Cette position correspond à la position de la figure 11 dans laquelle les extrémités filetées 76 des vis 38 sont introduites dans les perçages 72 des surfaces de fixation 16,17. Associés à cette position de la figure 11, les moyens de blocage en rotation 44 sont alors dans la position de la figure 5 avec l'alésage 86 de la platine 66 coulissant sur les premiers tronçons 90 des colonnes 88. Les moyens de blocage en déplacement du support 32, c'est-à-dire le pion 52, reçu dans le deuxième perçage 54 qu'il traverse, vient au contact de la première surface de fixation 16.

Puis, au cours d'une étape v), on centre les premiers perçages 40 des plaques 34,36 sur les vis 38.

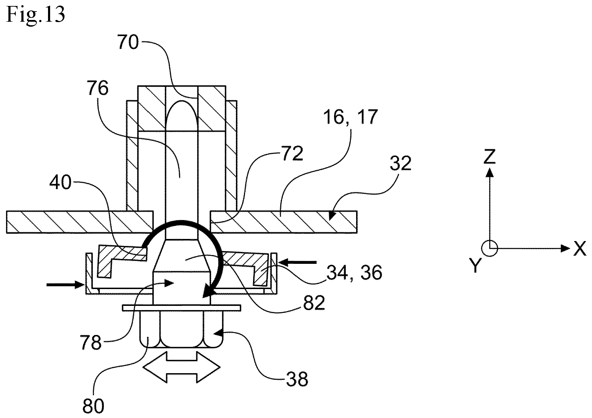

Pour ce faire, comme l'illustre la figure 13, dans un premier temps on introduit les extrémités filetées 76 des vis 38 dans les filetages 70 de l'élément de structure 14. Les extrémités filetées 76 des vis traversent avec jeu les perçages 72 des surfaces de fixation 16, 17 et les perçages 40 des plaques 34, 36. Dans cette position, les moyens de blocage en rotation 44 sont toujours dans la position de la figure 5.

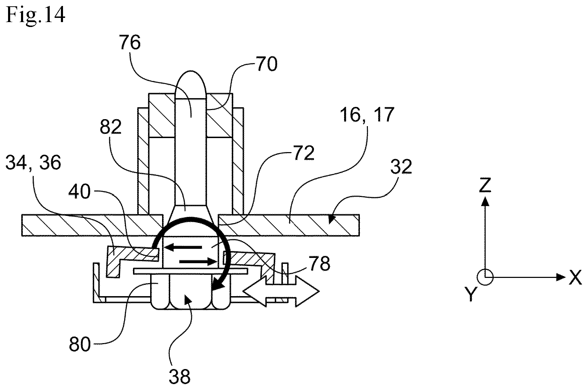

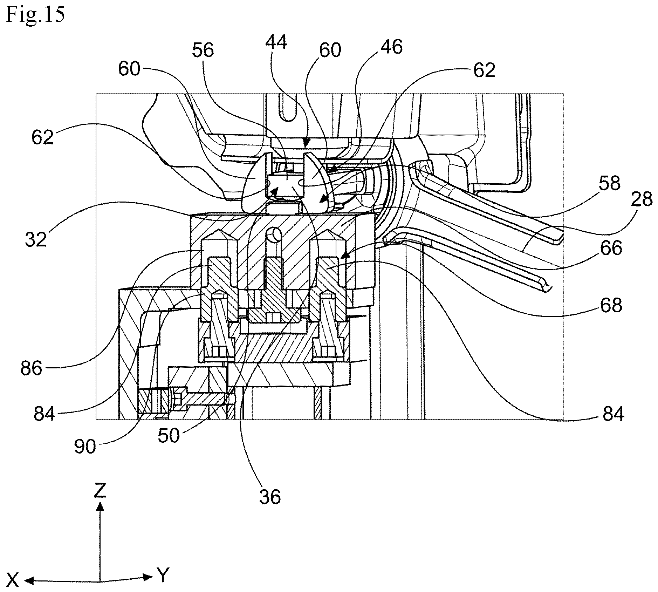

Puis, en continuant le serrage des vis 38, comme représenté à la figure 14, les tronçons de centrage 82 des vis 38 pénètrent dans les perçages 40 des plaques, 34, 36 puis à leur tour les portées de centrage 78 des vis 38 pénètrent dans les perçages 40. Ceci est rendu possible par le fait que les plaques 34, 36 sont libres de déplacement dans le plan X, Y. En effet, simultanément, les alésages 86 de la platine 66 quittent les premiers tronçons 90 des colonnes 88 tout en restant contenus sur les seconds tronçons 84, ce qui autorise le déplacement du support 32 dans le plan X, Y, comme illustré à la figure 15. Pendant ce temps, le pion 52 accompagne toujours la première plaque 36 en restant contact de la première surface de fixation 16, le ressort de rappel 51 de la tige 43 étant comprimé au fur et à mesure de la montée du support 32.

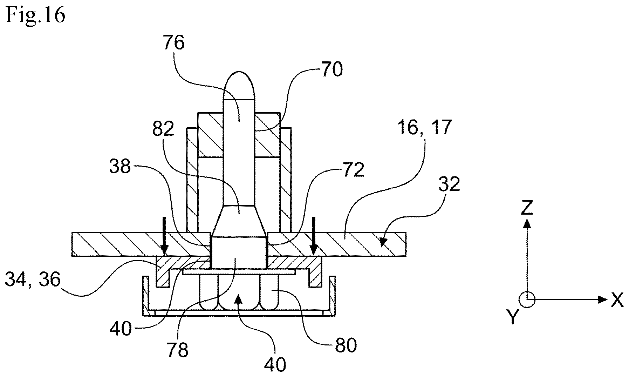

Au cours d'une étape vi),en poursuivant le serrage des vis 38, comme représenté à la figure 16, on fixe lesdites plaques 34,36 aux surfaces planes 16,17 de l'élément 14 de structure jusqu'à une deuxième position de fixation au cours de laquelle 38, en coopérant avec les plaques 16,17 et l'élément de structure 14, les vis 38 sollicitent les plaques 34, 36 et soulèvent au moins une des deux plaques (ici la plaque 36), pour qu'elle quitte le dispositif de soutien 42 et s'échappe des moyens de blocage 44 en rotation

Le support est alors uniquement toujours guidé par le pion 52. L'isostatisme du support 32 a donc été transféré du dispositif de soutien 42 à l'élément de structure 14 au cours de cette opération.

Puis au cours d'une étape vii), on descend le dispositif du soutien 42 pour libérer le support 32 du dispositif de soutien 42 et des moyens de blocage en déplacement 46.

Enfin, au cours d'une étape viii), on relâche la contrainte sur la biellette 28.

L'invention permet d'assurer le montage d'un train 30 de véhicule automobile comportant des supports 32 de biellettes 28 montaient directement sur l'élément de structure 14 de manière simple et efficace.

## Revendications

1. Ensemble (10) d'assemblage, comprenant :
- un sous-ensemble (12) de véhicule automobile, comprenant :
• un élément (14) de structure dudit véhicule automobile comportant deux surfaces planes de fixation (16, 17),
• un palier élastique (20) comportant une bague intérieure (22) d'axe X, et au moins une bague extérieure (24),
• un organe (28) du véhicule automobile, liée à ladite bague extérieure (2),
• un support coaxial (32) traversant la bague intérieure (22) du palier (20), comportant des première et seconde plaques (34, 36) s'étendant de part et d'autre du palier (20), chaque plaque (34, 36) étant apte à être fixée à une des surfaces planes (16, 17) de fixation par une vis (38) qui traverse un premier perçage (40) de ladite plaque (16, 17) et qui est introduite dans l'élément de structure (14),
- un dispositif (42) de soutien du palier (20) équipé du support (32), apte à recevoir en appui les première et seconde plaques (34, 36) du support (32), ledit dispositif (42) de soutien étant mobile verticalement sous ledit élément de structure (14) et parallèlement auxdites surfaces planes (16, 17) de fixation,
**caractérisé en ce qu'**il comporte en outre des moyens de blocage en rotation (44) du support (32) autour de l'axe X et de blocage en déplacement (46) du support (32) dans un plan (X, Y) parallèle auxdites surfaces planes (16, 17) de fixation par rapport au dispositif de soutien (42) pour s'opposer au déplacement dudit support (32) en réponse à une sollicitation exercée par ledit organe (28) sur ledit palier (20).

2. Ensemble (10) d'assemblage selon la revendication précédente, **caractérisé en ce que** le dispositif de soutien (42) comporte des première et seconde surfaces d'appui (50, 52) recevant en appui des extrémités des première et seconde plaques (34, 36) opposées au palier (20).

3. Ensemble (10) d'assemblage selon l'une des revendications précédentes, **caractérisé en ce que** les moyens (46) de blocage en déplacement du support (32) comportent :
- un pion (52), notamment tronconique, qui est porté par le dispositif de soutien (42) et s'étend perpendiculairement à une des surfaces planes de fixation (16),
- un deuxième perçage (54), complémentaire dudit pion (52) et formé dans l'extrémité de la première plaque (34), apte à être reçu sur ledit pion (52).

4. Ensemble (10) d'assemblage selon l'une des revendications précédentes, **caractérisé en ce que** le pion (52) est monté coulissant par rapport au dispositif de soutien (42) perpendiculairement à la surface plane de fixation (16) associée et **en ce qu'**il est rappelé élastiquement vers ladite surface plane de fixation (16) associée.

5. Ensemble (10) d'assemblage selon l'une des revendications 2 à 4, **caractérisé en ce que** les moyens de blocage en rotation (46) du support autour de l'axe X comportent un ergot (56) s'étendant axialement à partir de l'extrémité de la seconde plaque (36), et une fourche (58), portée par le dispositif de soutien (42) dont des branches (60) sont aptes à coopérer avec des bords (62) opposés par rapport à l'axe X dudit ergot (56).

6. Ensemble (10) d'assemblage selon la revendication précédente prise en combinaison avec l'une des revendications 3 ou 4, **caractérisé en ce que** le pion (52) et la fourche (58) s'étendent respectivement à partir des première et deuxième surfaces d'appui (34, 36), et sont portés par un bâti commun (64).

7. Ensemble (10) d'assemblage selon la revendication précédente, **caractérisé en ce que** la fourche (58) est portée par une platine (66) qui est guidée par rapport au bâti commun par l'intermédiaire d'une glissière (68) d'axe (Z) perpendiculaire à la surface plane de fixation (17) associée.

8. Ensemble (10) d'assemblage selon la revendication précédente, **caractérisé en ce qu'**il comporte en outre des moyens de positionnement automatique du support (32) par rapport à l'élément de structure (14), comportant :
- deux filetages (70), fixes par rapport à l'élément de structure (14), coaxiaux à des troisièmes perçages (72) formés dans les surfaces de fixation (16, 17), et aptes à recevoir des extrémités filetées (76) des vis (38) ,
- les premiers perçages (40) formés dans les plaques (34, 36), configurés pour être traversés avec jeu par les extrémités filetées (76) desdites vis (38),
- des portées de centrage (78) desdites vis (38), agencées entre des têtes (80) desdites vis (38) et lesdites extrémités filetées (76), de diamètre correspondant auxdits premiers perçages (40) ,
- une extrémité d'échappement (84) de la glissière (68), conformée pour permettre un échappement de la platine (66) hors de la glissière (68) en fin de course avec un débattement dans un plan (X,Z) parallèle à la surface plane (17) de fixation associée.

9. Ensemble (10) d'assemblage selon la revendication précédente, **caractérisé en ce que** la glissière (68) comporte :
- au moins un alésage (86) formé dans la platine (66), d'axe (Z) perpendiculaire à la surface plane (17) de fixation associée,
- au moins une colonne (88), portée par le bâti (64), reçue dans ledit alésage (86), ladite colonne (88) comportant un premier tronçon (90) jointif avec le bâti (64), de même diamètre que l'alésage (86), et un second tronçon distal, jointif avec le premier tronçon (90), de diamètre inférieur à celui du premier tronçon (90), formant l'extrémité d'échappement (84) de la glissière (68).

10. Procédé d'assemblage d'un sous-ensemble (12) de véhicule automobile sous contrainte à l'aide d'un ensemble (10) d'assemblage du type décrit précédemment,
**caractérisé en ce qu'**il comporte les étapes de :
i) disposer l'organe (28) avec le palier (20) équipé du support (32) avec ses plaques (34, 36) reposant sur le dispositif de soutien (42) et coopérant avec les moyens de blocage en rotation (44) et de blocage en déplacement (46) du support (32),
ii) exercer une contrainte sur ledit organe (28) pour qu'il exerce une sollicitation sur le palier (20),
iii) déplacer le support (32) reposant sur le dispositif de soutien (42) sous l'élément de structure (14) en agençant chaque plaque (34, 36) en regard d'une surface de fixation (16, 17),
iv) remonter le dispositif de soutien (42) sous l'élément de structure (14) jusqu'à une première position d'accostage au cours de laquelle les vis (38) sont partiellement introduites dans l'élément de structure (14),
v) centrer les premiers perçages (40) des plaques (34, 36) sur les vis (38),
vi) fixer lesdites plaques (34, 36) aux surfaces planes (16, 17) de l'élément de structure (14) jusqu'à une deuxième position de fixation au cours de laquelle lesdites vis (38), en coopérant avec les plaques (34, 36) et l'élément de structure (14), sollicitent les plaques (14) et soulève au moins une des deux plaques (17) pour qu'elle quitte le dispositif de soutien (42) et s'échappe des moyens (44) de blocage en rotation du support.
vii) descendre le dispositif du soutien (42) pour libérer le support (32) du dispositif de soutien (32) et des moyens (46) de blocage en déplacement,
viiii) relâcher la contrainte sur ledit organe (28).
